# EUROPEAN PATENT APPLICATION

(11) **EP 0 687 587 A1**
(43) Date of publication of application: **20.12.1995**
(21) Application number: 95303648.0
(22) Date of filing: 30.05.1995
(51) Int. Cl.: B60K 15/07, F17C 13/12

(54) **Safety pressure vessel system**

(30) Priority: 13.06.1994 US 259293
(71) Applicant: TECHNICAL PRODUCTS GROUP INCORPORATED, Lincoln, Nebraska 68504 (US)
(72) Inventor: Duvall, Paul F., Lincolnshire, Illinois 60069 (US)
(74) Representative: Allden, Thomas Stanley

(57) **Abstract**

A safety system is provided for mounting a pressure vessel system (10) such as a natural gas tank to a support structure such as on a vehicle. The pressure vessel system includes a shell (12) having an aperture alignable with an aperture in the support structure (18). A fastener (26) extends through the aligned apertures and includes a shear section (46) located at an interface between the shell and the support structure to provide a first safety measure defining the point of separation of the vessel from the support structure due to sudden impact. A tether cable (62) is interconnected between the pressure vessel system and the support structure. The tether cable has at least a minimum amount of slack therein to provide a second, sequential safety measure to restrain free travel of the pressure vessel system should the shearable fastener break. A camming surface (74) is provided between the pressure vessel system (10) and the support structure (18) for directing the vessel system away from a forward direction of travel, to provide a third, sequential safety measure in the event that the vessel system breaks away from both the shearable fastener and the tether cable. A safety pressure vessel system incorporates a plurality of inner pressure tanks (22) within the shell (12), the tanks and shell being fabricated of filament composite material. A shock absorbing foam filler (24) is provided within the outer shell separating the inner tanks from each other and the inner tanks from the outer shell.

## Description

### Field of the Invention

This invention generally relates to the art of pressure vessels or tanks and, particularly, to a filament composite safety pressure vessel system that is particularly applicable as a natural gas tank system on a vehicle.

### Background of the Invention

Pressure vessels or tanks are used in a wide variety of applications, such as for use in containing pressurized fluidic material. Such tanks may be fabricated of a variety of materials, ranging from metal to highly sophisticated filament composite material. As a general rule, lower pressure vessels are fabricated of metal, such as a common propane gas tank. Higher pressure vessels tend to be fabricated of filament composite material. Such composite materials also are used when safety is a major consideration, regardless of the pressure range, such as in an aircraft fuel tank.

One area in which pressure vessels may be used is for a natural gas tank on a vehicle such as an automobile. In such a natural gas tank, not only is safety of utmost consideration, but extraordinarily high pressures are involved. In comparison to an ordinary metal propane gas tank that might contain gas pressurized to 100 psi, a natural gas tank may be pressurized to as much as 3,000-3,600 psi. When such a pressure vessel as the highly pressurized natural gas tank is mounted on a moving vehicle, such as an automobile, it can be understood that extraordinary safety measures or features must be incorporated in the pressure vessel system to prevent bursting or other damage to the tank, as well as to protect against a wide variety of other potential problems such as fires, chemical deterioration, abrasion deterioration and the like. Although it has been known for a long time to operate a vehicle by natural gas fuel, implementation of such a vehicle has been restrained or prohibited because of the lack of acceptable safety measures in containing the natural gas, itself.

Consequently, the present invention is directed to solving the myriad of problems outlined above by providing a safety pressure vessel system which has a number of safety measures or features which, although being quite effective alone, are designed to provide sequential "lines of defense" in providing protection in the event that a natural gas tank separates from a vehicle due to sudden impact or other external forces. In fact, controlled separation of the tank is contemplated. The invention also is directed to providing other protective features, such as fire protection, chemical protection, abrasion protection and the like.

### Summary of the Invention

An object, therefore, of the invention is to provide a new and improved safety pressure vessel system of the character described.

Another object of the invention is to provide a number of safety measures or features particularly adapted for use in natural gas tank systems for vehicles.

A further object of the invention is to provide various safety features which, by design, operate in a sequential manner to provide lines of defense or protection which are seriatim effective.

In the exemplary embodiment of the invention, a safety system is provided for mounting a pressure vessel such as a natural gas tank to a support structure such as on a vehicle. As disclosed herein, a plurality of individual pressure vessels are incorporated in the system, but various features of the invention are equally applicable for incorporation with a single pressure vessel. Therefore, the term "pressure vessel system" is being used herein to define a single pressure vessel or an assembly that may include more than one individual pressure vessel or "tank" in the assembly.

With the above understanding, the safety system includes a pressure vessel system having a shell with an aperture therein. The support structure has an aperture therein alignable with the aperture in the shell. A fastener, such as a bolt-like member, extends through the aligned apertures for mounting the pressure vessel system to the support structure. The fastener includes a shear section, such as a reduced-diameter section in the bolt-like member, located at an interface between the shell and the support structure. Therefore, the point of separation of the vessel system from the support structure due to sudden impact or other external forces is predetermined to be located at that interface.

Preferably, the shell is fabricated of a filament composite material. Two different embodiments of fasteners are disclosed herein. In one embodiment, an internally threaded bushing is fixed, as by bonding, within the aperture in the composite shell, and the fastener is provided as an externally threaded bolt-like member threadable into the bushing. In a second embodiment, the bolt-like member is bonded directly to the shell within the aperture therein, and the bolt-like member projects into the aperture in the support structure.

The safety system of the invention also includes at least one tether cable interconnected between the pressure vessel system and the vehicle support structure. The tether cable restrains free travel of the pressure vessel system from its mounted position in the event that the vessel system breaks away from its vehicle support structure due to sudden impact or other external forces. Preferably, the tether cable has at least a minimum amount of slack therein. Therefore, the shearable or frangible mounting fasteners or bolt-like members provide a first safety measure for the system of the invention, to be followed by the tether cable as a second or sequential safety measure for the system. A plurality of tether cables having different amounts of slack also is contemplated.

The safety system of the invention further contemplates that at least one of the shell of the pressure vessel or the support structure to which it is mounted, or both, include camming surfaces for directing the vessel system away from a forward direction of travel in the event that the vessel system breaks away from the support structure due to sudden impact or other external forces. As disclosed herein, the camming surfaces are shaped at a forward and downward angle to direct the pressure vessel system toward the ground (i.e. away from a passenger compartment) in the event that the vessel system breaks away from the support structure in a forward direction. Therefore, it can be seen that the camming surfaces provide a third line of protection should the pressure vessel system first break away from the vehicle support structure by shearing the mounting fasteners and then further break away from the tether cable.

Still further, the safety pressure vessel system of the invention includes safety impact features in the pressure vessel system itself. Particularly, the outer shell preferably is fabricated of filament composite material. A plurality of inner pressure containing tanks are mounted within the outer shell, and the tanks, themselves, preferably are fabricated of filament composite material. A shock absorbing foam filler is provided within the outer shell separating the inner tanks from each other and the inner tanks from the outer shell. Therefore, a further or fourth line of protection is provided should the pressure vessel system be separated from its vehicle support structure and be directed or diverted in a particular direction.

Lastly, the pressure vessel system includes other safety features such as providing a fire-resistant and a chemical-resistant coating on the outside of the shell of the pressure vessel system. An abrasion-resistant coating also may be provided.

Other objects, features and advantages of the invention will be apparent from the following detailed description taken in connection with the accompanying drawings.

### Brief Description of the Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIGURE 1 is a perspective view of a pressure vessel system according to the safety system of the invention;
FIGURE 2 is a vertical section taken generally along line 2-2 of Figure 1, with the vessel system mounted to a vehicle support structure;
FIGURE 3 is a fragmented section through the pressure vessel system and vehicle support structure, showing one embodiment of the shearable fastener;
FIGURE 4 is a fragmented section through the vessel system and the vehicle support structure, showing a second embodiment of the shearable fastener;
FIGURE 5 is a fragmented vertical section through the shell of the pressure vessel system, taken generally along line 5-5 of Figure 2;
FIGURE 6 is a fragmented vertical section through the shell of the pressure vessel system, taken generally along line 6-6 of Figure 2;
FIGURE 7 is a side elevational view of the pressure vessel system beneath a support structure such as a vehicle frame; and
FIGURE 8 is a vertical section taken generally along line 8-8 of Figure 1.

### Detailed Description of the Preferred Embodiments

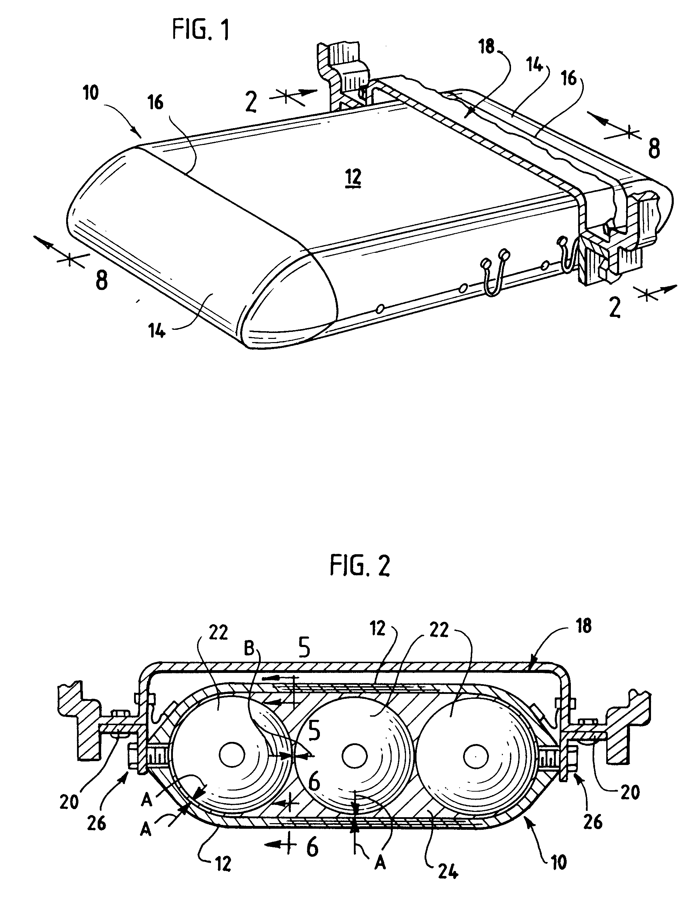

Referring to the drawings in greater detail, and first to Figure 1, the safety system of the invention is directed, in part, to mounting a pressure vessel system, generally designated 10, to a support structure (described hereinafter) such as on a vehicle. Pressure vessel system 10 includes an outer shell 12 of filament composite material. Actually, the shell includes two end caps 14 joined to the shell at peripheral edge interfaces 16. The shell may be fabricated as a one-piece structure, or it may be fabricated in two halves such as a clam shell.

As stated, shell 12 preferably is of a filament composite material. In other words, the "composite" includes a filamentary material bonded together by an epoxy system. The shell may be filament wound, or it may be molded using preforms and a resin transfer molding (RTM) process, or a structural resin injection molding (SRIM) process. End caps 14 may be similarly fabricated. Preferably, the filaments of the composite are provided primarily of glass fibers with a small amount of carbon fibers. The glass fibers provide impact damage resistance and even gunfire protection, while the carbon fibers provide buckling stability. The fibers are bonded by a resin, such as an epoxy formulation, e.g. polyester or polyurethane. If the RTM or SRIM processes are used, a lower viscosity system may be used, such as of polyester or an isocyanate, or polyurethane.

Referring to Figure 2 in conjunction with Figure 1, pressure vessel system 10, with outer shell 12, is mounted to a support structure, generally designated 18, which may include a pair of mounting brackets 20. For instance, the support structure may be an automobile or other vehicular frame. There normally will be at least two pairs of such mounting brackets, one pair "aft" and one pair "forward" of the pressure vessel system. A plurality of inner pressure tanks 22 (Fig. 2) of filament composite material are mounted within outer shell 12. The tanks are filament wound preferably of carbon fibers in a resin of epoxy material. Glass fibers in an epoxy matrix may be used, or a combination of carbon and glass fibers may be used. A shock absorbing foam filler 24 is located within outer shell 12 separating inner tanks 22 from each other and separating the inner tanks from the outer shell. Filler 24 may be a foam-in-place "semi-rigid" polyurethane foam material. The foam acts as a shock absorbing or energy-absorbing medium. The thickness of the foam, as indicated by arrows "A" between the end-most pressure tanks and the shell should be at least on the order of 0.1 to 0.5 inches. A similar minimum thickness of the energy absorbing foam should be provided between adjacent tanks, as indicated by arrows "B".

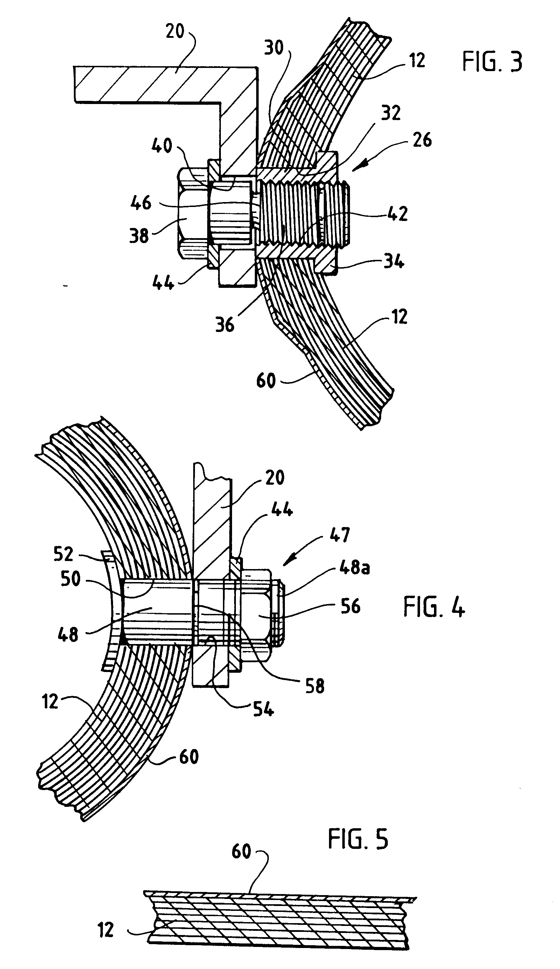

Still referring to Figure 2, pressure vessel system 10 is mounted to support structure 18, including mounting brackets 20, by fasteners, generally designated 26. The fasteners are shearable fastening means as described below. More particularly, referring to Figure 3 in conjunction with Figure 2, each fastener 26 includes an internally threaded bushing 30 bonded, as by an adhesive, within an aperture 32 in shell 12. The bushing has an enlarged internal head portion 34 for abutting against the inside of the shell. An externally threaded metal (steel) bolt 36, having an outside head 38, extends through an aperture 40 in mounting bracket 20, and the bolt is threaded into bushing 30, as at 42. A lock washer 44 is located between head 38 of the bolt and mounting bracket 20.

Generally, the invention contemplates that bolt 36 be provided with a shear section 46 located at the interface between shell 12 and the support structure, namely bracket 20. Actually, shear section 46 is provided by a reduced-diameter section of the bolt located at the interface between the shell and its support structure. The material of the bolt and the size of the reduced-diameter section are such that the shearable fasteners break away and separate the pressure vessel from the support structure in response to forces caused by a low mph collision, such as on the order of 10-20 mph. It is desired that the forces of more serious collisions or impacts on the pressure vessel not be transferred to the interior of the pressure vessel assembly. Rather, the sheared fasteners can easily be replaced after they have performed their energy absorbing function.

Referring to Figure 4 in conjunction with Figure 2, another embodiment of a shearable fastener, generally designated 47, is shown. Again, the fastener is designed to shear at the interface between shell 12 and the support structure provided by mounting bracket 20.

More particularly, a metal (steel) stud 48 is bonded, as by an adhesive, within an aperture 50 in shell 12. The stud has an enlarged head portion 52 within the shell and abutting against the interior surface of the shell. The stud projects through an aperture 54 in mounting bracket 20, and a distal end 48a of the stud is externally threaded to provide a bolt-like member for receiving a fastening nut 56.

Again, the invention contemplates that stud 48 include a shear section 58 at the interface between shell 12 and bracket 20, as shown clearly in Figure 4. Actually, the shear section is a reduced-diameter section of the stud and is designed to shear at a predetermined force, such as 1,000 pounds of force.

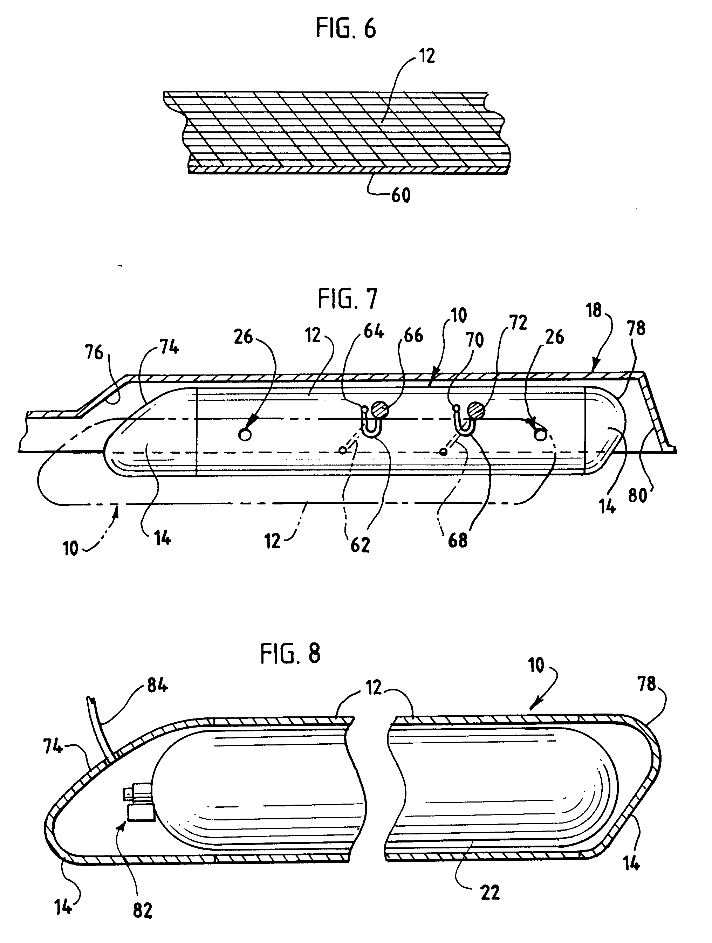

Figures 5 and 6 are fragmented sections through the top and bottom of shell 12, respectively. It can be seen that the thickness of the shell at the top (Fig. 5) thereof is less than the thickness of the shell at the bottom (Fig. 6) thereof. When used as a natural gas tank for a vehicle, pressure vessel system 10 most likely will be located beneath the vehicle as is prevalent with ordinary gasoline tanks in automobiles. Therefore, the bottom of shell 12 is of a greater thickness as shown in Figure 6 to provide greater resistance against debris. As an example, the thickness of the top of the shell in Figure 5 may be on the order of 0.2 to 0.5 inches, and the thickness of the bottom of the shell shown in Figure 6 may be on the order of 0.3 to 0.7 inches. If the pressure vessel is located interiorly of the vehicle, the top and bottom of the shell may be of equal thicknesses. However, providing the variable thicknesses, as shown, advantageously provides greater protection for the bottom of the pressure vessel while saving costs throughout the remainder of the vessel.

Both Figures 5 and 6 show that an outer coating 60 is provided about shell 12. This outer coating may be of various materials to provide for singular protection, or the "coating" may itself be a composite for providing various types of protection.

More particularly, it is contemplated that coating 60 may include an intumescent material that, when exposed to fire, swells or expands to as much as twenty times its initial thickness and forms an insulating "char" which helps protect the pressure tanks 22 from extreme heat for many minutes. Coating 60 also may include a thin film coating made of a chemical resistant material, such as "Tedlar" of DuPont Corporation to provide chemical protection against a wide variety of chemicals including battery acid.

Lastly, coating 60 may include a thin outer urethane coating to resist abrasion damage. Whereas the fire resistant coating should cover the entire vessel, the abrasion resistant coating can be limited to just the bottom or lower areas of the vessel that would be exposed to road debris or other sources of abrasion.

Referring to Figure 7, the safety system of the invention contemplates the provision of at least one tether cable 62 that is interconnected between pressure vessel 10 and support structure 18. The tether cable is secured between a point 64 on the support structure and a point 66 on outer shell 12 of the pressure vessel system. Appropriate fasteners are contemplated, such as using bolts or studs as shown in Figures 3 and 4, but of a non-shearable construction. Tether cable 62 has at least a minimum amount of slack therein. In essence, the tether cable restrains free travel of pressure vessel system 10 from its mounted position as secured by fasteners 26 in the event that the vessel system breaks away from its support structure due to sudden impact or other external forces. The tether cable may be of a variety of materials but is designed to break at a given force, such as on the order of 1,000 pounds. The amount of slack can vary, but the tether cable should be short enough to prevent the pressure vessel from striking anything before the tether cable is taut.

Therefore, it can be understood that shearable fasteners 26 (or 47) provide a first safety measure for the system of the invention, to be followed sequentially by tether cable 62 as a second safety measure for the system. It can be understood that, by providing at least a minimum amount of slack in tether cable 62, the combined system is effective to be sequential whereby the shearable fasteners first will be broken away and then the tether cable will take effect.

Still further, Figure 7 shows a second tether cable 68 secured to the support structure at 70 and to the outer shell at 72. Tether cable 68 operates the same as described above in relation to tether cable 62, except that tether cable 68 is provided with more slack therein than the slack in tether cable 62. For instance, tether cable 68 may be one inch longer than tether cable 62. With the differential lengths of the cables, one cable will fail before the other cable to provide an incremental energy absorption or reduction. Of course, more than two cables may be provided. For instance, if each cable is capable of withstanding 1,000 pounds of force, each sequential failure will absorb 1,000 pounds of energy. Lastly, it is contemplated that a plurality of tether cables 62 and 68 be provided on both opposite sides of pressure vessel system 10.

Still referring to Figure 7, the safety system of the invention contemplates still another sequential measure of protection should shearable fasteners 26 (or 47) first fail followed by the failure of tether cables 62 and/or 68. More particularly, it can be seen in Figure 7 that the top front end of pressure vessel system 10, i.e. the front end cap 14 of the vessel, is angled to provide a camming surface 74. Likewise, the appropriate supporting structure or other surrounding framework of the vehicle may be provided with a complementary interengaging camming surface 76. For instance, camming surface 76 may be on the lower floor panel of the vehicle. The general purpose of these camming surfaces is to direct pressure vessel system 10 away from a forward direction of travel in the event that the vessel breaks away from the support structure after shearable fasteners 26 (47) fail and tether cables 62 (68) fail. It is contemplated that the camming surfaces direct the pressure vessel system away from the passenger compartment of the vehicle. In the embodiment illustrated, camming surfaces 74 and 76 are at a forward and downward angle to direct pressure vessel system 10 toward the ground in the event that the vessel system breaks away from the support structure in a forward direction. Similarly, rear end cap 14 of pressure vessel 12 is provided with a camming surface 78, and the support structure may be provided with a complementary interengaging camming surface 80 to direct the vessel downwardly toward the ground in the event of a rear-end collision.

Lastly, referring to Figure 8 in conjunction with Figure 2, it can be seen that each pressure containing tank 22 is an elongated tank of a generally tubular construction. A plurality of such elongated tubular tanks are arranged within shell 12 in a generally horizontal plane. By providing a plurality of such elongated tubular tanks, versus a singular tank of equal capacity, the overall height profile of pressure vessel system 10 is considerably reduced so that the pressure vessel system is readily applicable for use on the underside of a vehicle, such as an automobile. Figure 8 also shows appropriate valving/ piping/manifolding apparatus, generally designated 82, at one or both ends of the tanks. Although not part of the invention, this apparatus provides means for filling, emptying and controlling the tanks and the contents thereof. The apparatus would communicate exteriorly of the tank, although not shown. A vent line 84 also may communicate the inside of shell 12 with atmosphere.

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein. Again, it is to be understood that the term "pressure vessel system" herein is intended to define a single pressure vessel or an assembly of a plurality of pressure vessels or tanks as shown herein, because various of the features herein, such as the shearable fasteners, the tether cables, the camming surfaces, and the protective coatings are equally applicable and quite useful with a single pressure vessel or tank.

## Claims

1. A safety system for mounting a pressure vessel system such as a natural gas tank to a support structure such as on a vehicle, comprising: said pressure vessel system including a shell having an aperture therein, said support structure having an aperture therein alignable with the aperture in the shell, a fastener extending through the aligned apertures for mounting the pressure vessel to the support structure, and said fastener including a shear section located at an interface between the shell and the support structure, whereby the point of separation of the vessel system from the support structure due to a sudden impact or other external forces is predetermined to be located at said interface.

2. The safety system of claim 1, including an internally threaded bushing fixed within the aperture in said shell, and the fastener comprises an externally threaded bolt-like member threadable into the bushing.

3. The safety system of claim 2, wherein said bolt-like member has a reduced-diameter section located at said interface and defining said shear section of the fastener.

4. The safety system of claim 2, wherein said shell is fabricated of a filament composite material, and said bushing is bonded within the aperture in the shell.

5. The safety system of claim 1, wherein said fastener comprises a bolt-like member having a reduced-diameter section located at said interface and defining said shear section of the fastener.

6. The composite system of claim 5, wherein said shell is fabricated of a filament composite material, and said fastener is bonded within the aperture in the shell.

7. A safety system for mounting a pressure vessel system such as a natural gas tank to a support structure such as on a vehicle, comprising: means for mounting the pressure vessel system on the support structure in a given position, at least one tether cable interconnected between the pressure vessel system and the support structure, and said tether cable having at least a minimum amount of slack therein, whereby the tether cable restrains free travel of the pressure vessel system from said given position in the event that the vessel system breaks away from the support structure due to sudden impact or other external forces.

8. The safety system of claim 7, including a plurality of said tether cables interconnected between the pressure vessel system and the support structure, at least one of the cables having more slack therein than another of the cables, such that should the one cable break another cable will provide a sequential restraining force.

9. A safety system for mounting a pressure vessel system such as a natural gas tank to a support structure such as on a vehicle, comprising: said pressure vessel system including an outer shell, said support structure including a frame portion located forwardly of a forward end of the shell, and at least one of the frame portion and the forward end of the shell including a camming surface for directing the vessel system away from a forward direction of travel in the event that the vessel system breaks away from the support structure due to sudden impact or other external forces.

10. The safety system of claim 9, wherein said camming surface is shaped at a forward and downward angle to direct the pressure vessel system toward the ground in the event that the vessel system breaks away from the support structure in a forward direction.

11. The safety system of claim 9, including at least one tether cable interconnected between the pressure vessel system and the support structure, the tether cable having at least a minimum amount of slack therein, whereby said frangible mounting means comprise a first safety measure for the safety system to be followed by the tether cable as a second safety measure for the safety system to be followed by said camming surface as a third safety measure for the safety system.

12. A safety pressure vessel system, comprising: an outer shell of filament composite material; a plurality of inner pressure tanks of filament composite material within the outer shell; and a shock absorbing foam filler within the outer shell separating the inner tanks from each other and the inner tanks from the outer shell.

13. A safety system for mounting a pressure vessel system such as a natural gas tank to a support structure such as on a vehicle, comprising: said pressure vessel system including an outer shell; said support structure including a frame portion located rearwardly of a rearward end of the shell; and at least one of the frame portion and the rearward end of the shell including a camming surface for directing the vessel downwardly in the event that the vessel breaks away from the support structure due to a rear-end type impact.
